# EUROPEAN PATENT APPLICATION

(11) **EP 4 597 752 A1**
(43) Date of publication of application: **06.08.2025**
(21) Application number: 25154087.8
(22) Date of filing: 27.01.2025
(51) Int. Cl.: H01R 4/34, H01M 50/298, H01M 50/50, H01R 4/48, H01R 11/28, H01R 11/09, H01R 11/12

(54) **ELECTRICAL CONNECTION MODULE AND ELECTRICAL CONNECTION ASSEMBLY**

(30) Priority: 30.01.2024 CN 202410132352
(71) Applicant: Tyco Electronics (Shanghai) Co., Ltd., Shanghai 200131 (CN)
(72) Inventor: Zhang, Yu, Shanghai, 200233 (CN); Zhou, Xiao, Shanghai, 200233 (CN); Zhou, You, Shanghai, 200233 (CN)
(74) Representative: Grünecker Patent- und Rechtsanwälte PartG mbB

(57) **Abstract**

The present invention discloses an electrical connection module and an electrical connection assembly. The electrical connection module comprises of: an electrical connection member (1) formed with a receiving cavity (101); and a contact spring (13) which is provided in the receiving cavity (101). The electrical connection member (1) has an outer peripheral wall (11) surrounding the receiving cavity (101), as well as a top wall (12) and a bottom opening (13a) opposite to the top wall (12) in an axial direction of the receiving cavity (101); the contact spring (13) is annular in shape so as to be able to be fitted like a ring onto a conductive post (21) of a connected object (2) inserted from the bottom opening (13a); the contact spring (13) is adapted to undergo elastic deformation along a radial direction of the receiving cavity (101) to make radial electrical contact with the inserted conductive post (21), so that the electrical connection member (1) is capable of being electrically connected to the connected object (2) via the contact spring (13). In the present invention, the contact spring is fitted onto the conductive post like a ring and makes electrical contact with it, ensuring reliable electrical contact even in a vibrating environment. Additionally, the present invention enables quick insertion and removal, making it very convenient to use.

## Description

### CROSS-REFERENCE TO RELATED APPLICATION

This application claims the benefit of Chinese Patent Application No. CN202410132352.6 filed on January 30, 2024 in the State Intellectual Property Office of China, the whole disclosure of which is incorporated herein by reference.

### BACKGROUND OF THE INVENTION

### Field of the Invention

The present invention relates to an electrical connection module and an electrical connection assembly comprising the electrical connection module.

### Description of the Related Art

In the prior art, when using busbars as conductive conductors, the contact surfaces of such electrical conduction systems are in plane to plane contact, usually fixed with bolts or laser welding. The bolt fixing method is mainly used for equipment connection, while laser welding is widely used in battery packs and is an irreversible connection method.

In the the prior art, for the electrical connection between the bus bar and the equipment, the electrical connection structure at the bus bar end is floatable, while the electrical connection structure at the equipment end is fixed and secured to the electrical connection structure at the equipment end using bolts. For example, in the application example of a contact device.

In the the prior art, for the electrical connection between busbars, the electrical connection structures at both ends of the busbars are floatable, and bolts are used to lock the electrical connection structures at both ends of the busbars, for example, in the application example of a cabinet.

In the the prior art, for the electrical connection between the bus bar and the pole of the rechargeable battery cell, the electrical connection structure at the bus bar end is floatable, and the pole at the battery cell end is fixed, and the electrical connection structure at the bus bar end is welded to the pole at the battery cell end by laser welding, for example, in the application example of a battery pack.

In the prior art, when using flat to flat electrical contact methods, poor electrical contact can occur in vibration environments. When welding is used, it may result in the inability to achieve insertion and removal functions, making it inconvenient to use.

### SUMMARY OF THE INVENTION

The present invention has been made to overcome or alleviate at least one aspect of the above mentioned disadvantages.

According to an aspect of the present invention, there is provided an electrical connection module. The electrical connection module comprises of an electrical connection member formed with a receiving cavity; and a contact spring which is provided in the receiving cavity. The electrical connection member has an outer peripheral wall surrounding the receiving cavity, as well as a top wall and a bottom opening opposite to the top wall in an axial direction of the receiving cavity; the contact spring is annular in shape so as to be able to be fitted like a ring onto a conductive post of a connected object inserted from the bottom opening; the contact spring is adapted to undergo elastic deformation along a radial direction of the receiving cavity to make radial electrical contact with the inserted conductive post, so that the electrical connection member is capable of being electrically connected to the connected object via the contact spring.

According to an exemplary embodiment of the present invention, a top through hole is formed in the top wall of the receiving cavity to allow the conductive post to pass through, so that the conductive post inserted from the bottom opening of the receiving cavity can pass through the top wall of the receiving cavity through the top through hole.

According to another exemplary embodiment of the present invention, the electrical connection module further comprises a limiting element which is annular in shape and installed in the receiving cavity, is used to limit the contact spring in the axial direction of the receiving cavity to prevent the contact spring from being moved in the axial direction of the receiving cavity.

According to another exemplary embodiment of the present invention, the limiting element has a peripheral wall portion, a bottom wall, and a top opening, a bottom through-hole is formed in the bottom wall of the limiting element to allow the conductive post to pass through, the bottom wall of the limiting element and the top wall of the receiving cavity are opposite in the axial direction of the receiving cavity and respectively rest on the upper and lower sides of the contact spring, so that the contact spring cannot be moved in the axial direction of the receiving cavity.

According to another exemplary embodiment of the present invention, the outer peripheral surface of the peripheral wall portion of the limiting element is interference fit with the inner peripheral surface of the outer peripheral wall of the receiving cavity to fix the limiting element in the receiving cavity.

According to another exemplary embodiment of the present invention, before the conductive post is inserted into the contact spring, there is a predetermined gap between the contact spring and the peripheral wall portion of the limiting element to allow the contact spring to float radially in the receiving cavity.

According to another exemplary embodiment of the present invention, after the conductive post is inserted into the contact spring, the contact spring is expanded by the conductive post in the radial direction of the receiving cavity and comes into contact with the peripheral wall portion of the limiting element.

According to another exemplary embodiment of the present invention, before the conductive post is inserted into the contact spring, the contact spring comes into contact with the peripheral wall portion of the limiting element.

According to another exemplary embodiment of the present invention, the top surface of the peripheral wall portion of the limiting element is pressed against the inner side of the top wall of the receiving cavity, and the bottom wall of the limiting element is adapted to be pressed against the top surface of the connected object to be able to position the limiting element in the axial direction of the receiving cavity.

According to another exemplary embodiment of the present invention, the electrical connection member has a flat connection portion, the outer peripheral wall of the receiving cavity protrudes from the top surface of the flat connection portion; the bottom surface of the flat connection portion is adapted to rest against the top surface of the connected object, and the bottom opening of the receiving cavity is located on the bottom surface of the flat connection portion.

According to another exemplary embodiment of the present invention, the electrical connection module further comprises a nut suitable for threaded connection to the conductive post passing through the top wall of the receiving cavity to fasten the electrical connection module to the top surface of the connected object; when the electrical connection module is fastened to the top surface of the connected object, the nut is pressed against the outer side of the top wall of the receiving cavity.

According to another exemplary embodiment of the present invention, when the electrical connection module is fastened to the top surface of the connected object, the bottom surface of the electrical connection member is pressed against the top surface of the connected object or tilted at a predetermined angle relative to the top surface of the connected object.

According to another exemplary embodiment of the present invention, the contact spring comprises: a spiral spring which is coiled into a ring shape to be suitable for being fitted onto the conductive post; and a C-shaped elastic ring which is installed in the spiral spring. The spiral spring is used to make electrical contact with the conductive post, and the C-shaped elastic ring is used to provide auxiliary contact force to the spiral spring to improve the electrical contact force between the spiral spring and the conductive post.

According to another exemplary embodiment of the present invention, the contact spring comprises a spring plate which is wavy and coiled into a ring shape to be fitted onto the conductive post.

According to another exemplary embodiment of the present invention, a single receiving cavity is formed in the electrical connection member, and the electrical connection module is used to electrically connect with a conductive post on a single connected object.

According to another exemplary embodiment of the present invention, multiple receiving cavities are formed in the electrical connection member, and the electrical connection module comprises multiple contact springs respectively arranged in the multiple receiving cavities, for electrically connecting with conductive posts on multiple connected objects to electrically interconnect the conductive posts on the multiple connected objects.

According to another exemplary embodiment of the present invention, the electrical connection module further comprises multiple limiting elements respectively arranged in the multiple receiving cavities, for respectively preventing the multiple contact springs from being moved in the axial direction of the receiving cavity.

According to another aspect of the present invention, there is provided an electrical connection assembly. The electrical connection assembly comprises of the above electrical connection module; and a connected object which has a conductive post for electrical connection. The conductive post is inserted into the receiving cavity of the electrical connection member, and the contact spring is fitted onto the inserted conductive post and in electrical contact with the conductive post to electrically connect the electrical connection member to the connected object via the contact spring.

According to an exemplary embodiment of the present invention, the connected object has a top surface, and the conductive post extends upward from the top surface of the connected object by a predetermined height and has a thread formed on the end of the conductive post; the conductive post passes through the top through-hole in the top wall of the receiving cavity and is threaded with a nut to fasten the electrical connection module to the top surface of the connected object.

According to another exemplary embodiment of the present invention, the electrical connection member is a first bus bar, the connected object is a second bus bar, and the first bus bar is electrically connected to the second bus bar via the contact spring.

According to another exemplary embodiment of the present invention, the electrical connection member is a bus bar, and the connected object is an electrical device, the bus bar is electrically connected to the electrical device via the contact spring.

According to another exemplary embodiment of the present invention, the electrical connection member is a bus bar, the connected object is a rechargeable battery cell, the conductive post is an electrode end of the battery cell, and the bus bar is electrically connected to the battery cell via the contact spring.

According to another exemplary embodiment of the present invention, the two ends of the electrical connection member are respectively formed with the receiving cavities, and the electrical connection module comprises two contact springs respectively arranged in the receiving cavities at both ends of the electrical connection member; the electrical connection assembly comprises multiple electrical connection modules and multiple battery cells, the electrode ends of adjacent battery cells are respectively inserted into the receiving cavities at both ends of the electrical connection member, so that the electrode ends of adjacent battery cells are electrically interconnected.

In the aforementioned exemplary embodiments according to the present invention, the contact spring is fitted onto the conductive post like a ring and electrically contacts the conductive post, ensuring reliable electrical contact even in a vibrating environment. Moreover, the present invention can achieve fast insertion and removal function, making it very convenient to use.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of an electrical connection assembly according to a first embodiment of the present invention;
Figure 2 shows a cross-sectional view of the electrical connection assembly shown in Figure 1;
Figure 3 shows an illustrative exploded view of the electrical connection assembly according to the first embodiment of the present invention;
Figure 4 shows an illustrative perspective view of the contact spring of the electrical connection assembly according to the first embodiment of the present invention;
Figure 5 shows a cross-sectional view of the electrical connection assembly shown in Figure 3;
Figure 6 shows an illustrative perspective view of an electrical connection assembly according to a second embodiment of the present invention;
Figure 7 shows a cross-sectional view of the electrical connection assembly shown in Figure 6;
Figure 8 shows an illustrative exploded view of the electrical connection assembly according to the second embodiment of the present invention;
Figure 9 shows an illustrative perspective view of the contact spring of the electrical connection assembly according to the second embodiment of the present invention;
Figure 10 shows a cross-sectional view of the electrical connection assembly shown in Figure 8;
Figure 11 shows an illustrative perspective view of an electrical connection assembly according to a third embodiment of the present invention;
Figure 12 shows an illustrative perspective view of an electrical connection module according to a third embodiment of the present invention;
Figure 13 shows a cross-sectional view of an electrical connection module according to a third embodiment of the present invention; and
Figure 14 shows an illustrative exploded view of an electrical connection module according to a third embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided an electrical connection module. The electrical connection module comprises of an electrical connection member formed with a receiving cavity; and a contact spring which is provided in the receiving cavity. The electrical connection member has an outer peripheral wall surrounding the receiving cavity, as well as a top wall and a bottom opening opposite to the top wall in an axial direction of the receiving cavity; the contact spring is annular in shape so as to be able to be fitted like a ring onto a conductive post of a connected object inserted from the bottom opening; the contact spring is adapted to undergo elastic deformation along a radial direction of the receiving cavity to make radial electrical contact with the inserted conductive post, so that the electrical connection member is capable of being electrically connected to the connected object via the contact spring.

According to another general concept of the present invention, there is provided an electrical connection assembly. The electrical connection assembly comprises of the above electrical connection module; and a connected object which has a conductive post for electrical connection. The conductive post is inserted into the receiving cavity of the electrical connection member, and the contact spring is fitted onto the inserted conductive post and in electrical contact with the conductive post to electrically connect the electrical connection member to the connected object via the contact spring.

### First Embodiment

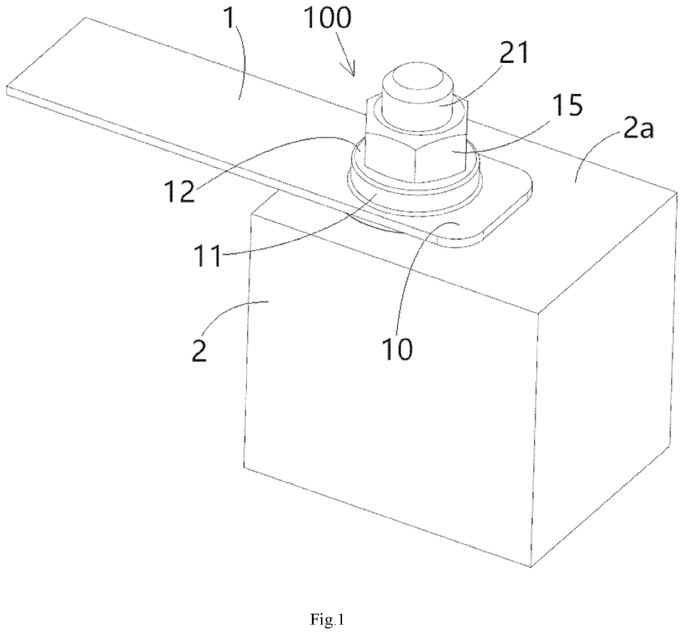

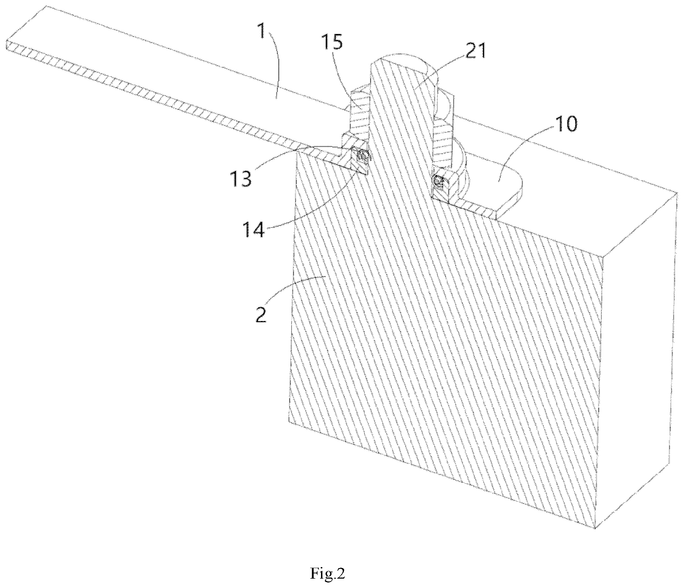

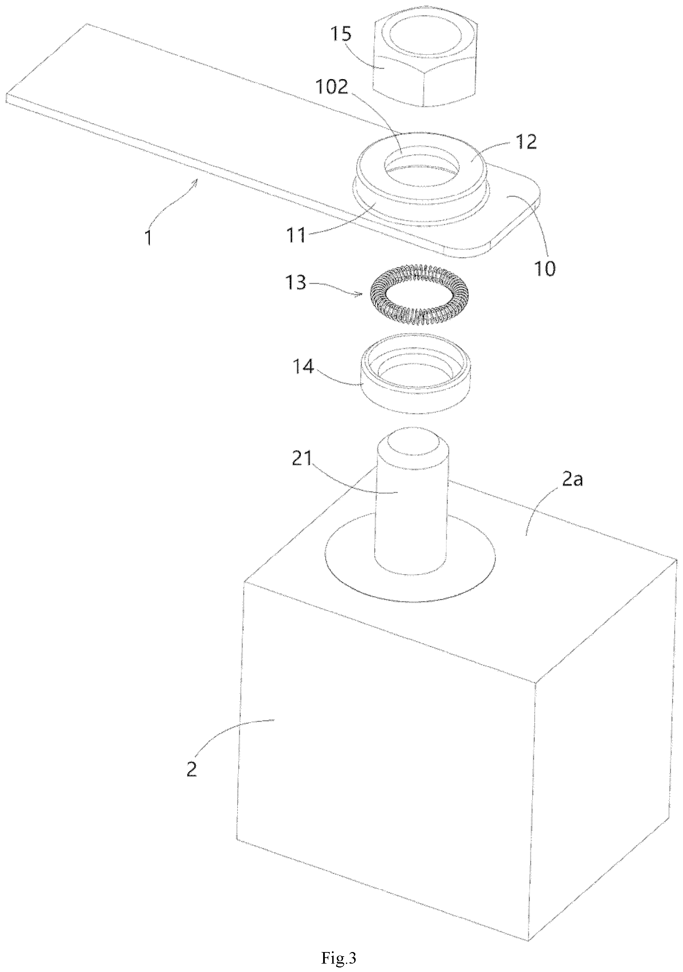

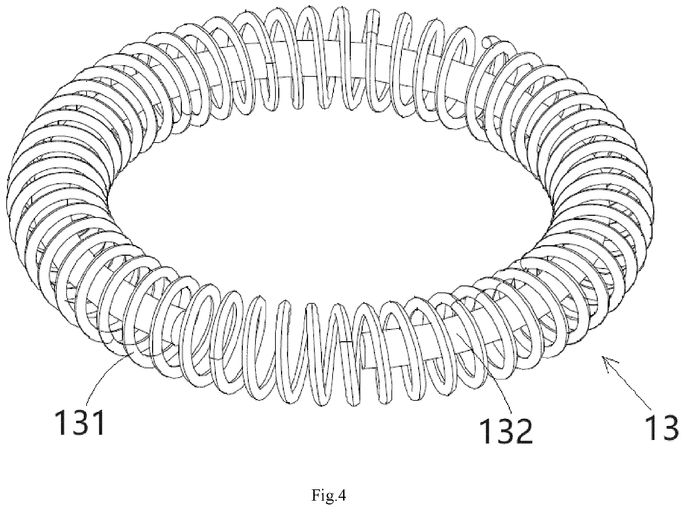

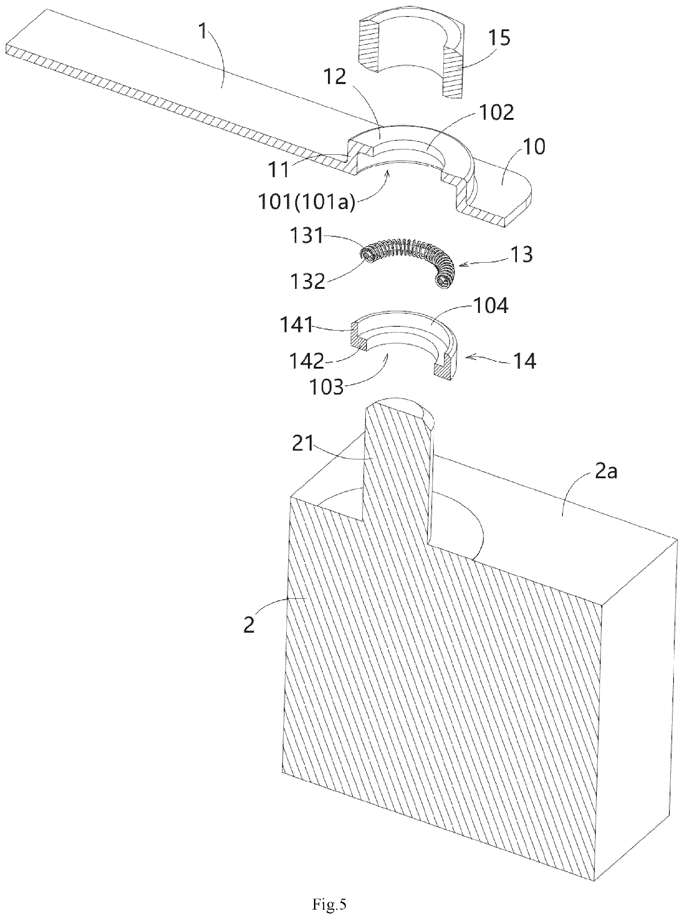

Figures 1 to 5 show a first embodiment according to the present invention. Among them, Figure 1 shows an illustrative perspective view of the electrical connection assembly according to the first embodiment of the present invention; Figure 2 shows a cross-sectional view of the electrical connection assembly shown in Figure 1; Figure 3 shows an illustrative exploded view of the electrical connection assembly according to the first embodiment of the present invention; Figure 4 shows an illustrative perspective view of the contact spring of the electrical connection assembly according to the first embodiment of the present invention; Figure 5 shows a cross-sectional view of the electrical connection assembly shown in Figure 3.

As shown in Figures 1 to 5, in an exemplary embodiment of the present invention, an electrical connection module 100 is disclosed. The electrical connection module 100 includes an electrical connection member 1 and a contact spring 13. A receiving cavity 101 is formed in the electrical connection member 1. The contact spring 13 is set in the receiving cavity 101 of the electrical connection member 1. The electrical connection member 1 has an outer peripheral wall 11 surrounding the receiving cavity 101, as well as a top wall 12 and a bottom opening 101a that are opposite to each other in the axial direction of the receiving cavity 101.

As shown in Figures 1 to 5, in the illustrated embodiment, the contact spring 13 is annular so as to be able to be fitted onto the conductive post 21 of the connected object 2 inserted from the bottom opening 13a like a ring. The contact spring 13 is adapted to undergo elastic deformation along the radial direction of the receiving cavity 101, so as to be able to make radial electrical contact with the inserted conductive post 21, enabling the electrical connection member 1 to be electrically connected to the connected object 2 via the contact spring 13.

As shown in Figures 1 to 5, in the illustrated embodiment, a top through-hole 102 is formed in the top wall 12 of the receiving cavity 101 to allow the conductive post 21 to pass through, so that the conductive post 21 inserted from the bottom opening 101a of the receiving cavity 101 can pass through the top wall 12 of the receiving cavity 101 through the top through-hole 102.

As shown in Figures 1 to 5, in the illustrated embodiment, the electrical connection module 100 further includes a limiting element 14, which is annular in shape and installed in the receiving cavity 101 for limiting the contact spring 13 in the axial direction of the receiving cavity 101 to prevent the contact spring 13 from being moved in the axial direction of the receiving cavity 101.

As shown in Figures 1 to 5, in the illustrated embodiment, the limiting element 14 has a peripheral wall portion 141, a bottom wall 142, and a top opening 104. A bottom through-hole 103 is formed in the bottom wall 142 of the limiting element 14 to allow the conductive post 21 to pass through. The bottom wall 142 of the limiting element 14 and the top wall 12 of the receiving cavity 101 are opposite in the axial direction of the receiving cavity 101 and respectively rest on the upper and lower sides of the contact spring 13, so that the contact spring 13 cannot be moved in the axial direction of the receiving cavity 101.

As shown in Figures 1 to 5, in the illustrated embodiment, the outer peripheral surface of the peripheral wall portion 141 of the limiting element 14 is in interference fit with the inner peripheral surface of the outer peripheral wall 11 of the receiving cavity 101 to fix the limiting element 14 in the receiving cavity 101.

As shown in Figures 1 to 5, in the illustrated embodiment, before the conductive post 21 is inserted into the contact spring 13, there is a predetermined gap between the contact spring 13 and the peripheral wall portion 141 of the limiting element 14 to allow the contact spring 13 to float radially in the receiving cavity 101. In this way, it can absorb errors caused by significant manufacturing, installation, or thermal expansion.

As shown in Figures 1 to 5, in the illustrated embodiment, after the conductive post 21 is inserted into the contact spring 13, the contact spring 13 is expanded by the conductive post 21 in the radial direction of the receiving cavity 101 and comes into contact with the peripheral wall portion 141 of the limiting element 14.

As shown in Figures 1 to 5, in another exemplary embodiment, before the conductive post 21 is inserted into the contact spring 13, the contact spring 13 comes into contact with the peripheral wall portion 141 of the limiting element 14.

As shown in Figures 1 to 5, in the illustrated embodiment, the top surface of the peripheral wall portion 141 of the limiting element 14 is pressed against the inner side of the top wall 12 of the receiving cavity 101, and the bottom wall 142 of the limiting element 14 is adapted to be pressed against the top surface 2a of the connected object 2, so as to be able to position the limiting element 14 in the axial direction of the receiving cavity 101.

As shown in Figures 1 to 5, in the illustrated embodiment, the electrical connection member 1 has a flat connecting portion 10, the outer peripheral wall 11 of the receiving cavity 101 protrudes from the top surface of the flat connecting portion 10. The bottom surface of the flat connection portion 10 is adapted to rest against the top surface 2a of the connected object 2, and the bottom opening 101a of the receiving cavity 101 is located on the bottom surface of the flat connection portion 10.

As shown in Figures 1 to 5, in the illustrated embodiment, the electrical connection module 100 further comprises a nut 15, which is adapted to be threaded onto a conductive post 21 that passes through the top wall 12 of the receiving cavity 101, to fasten the electrical connection module 100 to the top surface 2a of the connected object 2. When the electrical connection module 100 is fastened to the top surface 2a of the connected object 2, the nut 15 is pressed against the outer side of the top wall 12 of the receiving cavity 101.

As shown in Figures 1 to 5, in the illustrated embodiment, when the electrical connection module 100 is fastened to the top surface 2a of the connected object 2, the bottom surface of the electrical connection member 1 is pressed against the top surface 2a of the connected object 2 or tilted at a predetermined angle relative to the top surface of the connected object 2.

As shown in Figures 1 to 5, in the illustrated embodiment, the contact spring 13 includes a coil spring 131 and a C-shaped elastic ring 132. The coil spring 131 is coiled into a ring shape to fit on the conductive post 21. The C-shaped elastic ring 132 is set in the coil spring 131. The coil spring 131 is used to make electrical contact with the conductive post 21, and the C-shaped elastic ring 132 is used to provide auxiliary contact force to the coil spring 131 to improve the electrical contact force between the coil spring 131 and the conductive post 21.

However, please note that the contact spring 13 of the present invention is not limited to the illustrated embodiment. For example, in another exemplary embodiment of the present invention, the contact spring 13 may include a spring plate that is wavy and coiled into a ring shape to be suitable for being fitted onto the conductive post 21.

As shown in Figures 1 to 5, in another exemplary embodiment of the present invention, an electrical connection assembly is disclosed. The electrical connection assembly includes an electrical connection module 100 and a connected object 2. The connected object 2 has a conductive post 21 for electrical connection. The conductive post 21 is inserted into the receiving cavity 101 of the electrical connection member 1, and the contact spring 13 is fitted onto the inserted conductive post 21 and in electrical contact with it, to electrically connect the electrical connection member 1 to the connected object 2 via the contact spring 13.

As shown in Figures 1 to 5, in the illustrated embodiment, the connected object 2 has a top surface 2a, and the conductive post 21 extends upward from the top surface 2a of the connected object 2 by a predetermined height and is threaded at the end of the conductive post 21. The conductive post 21 passes through the top through-hole 102 in the top wall 12 of the receiving cavity 101 and is threaded with a nut 15 to fasten the electrical connection module 100 to the top surface 2a of the connected object 2.

As shown in Figures 1 to 5, in the illustrated embodiment, the electrical connection member 1 is a bus bar, the connected object 2 is an electrical device, and the bus bar is electrically connected to the electrical device via the contact spring 13.

As shown in Figures 1 to 5, in the illustrated embodiment, a single receiving cavity 101 is formed in the electrical connection member 1. The electrical connection module 100 is used to electrically connect with the conductive post 21 on a single connected object 2.

### Second Embodiment

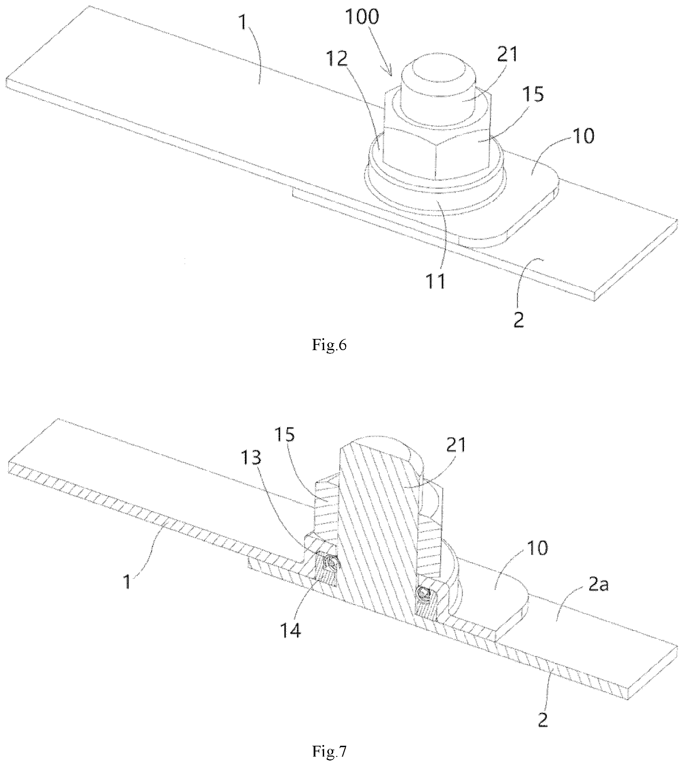

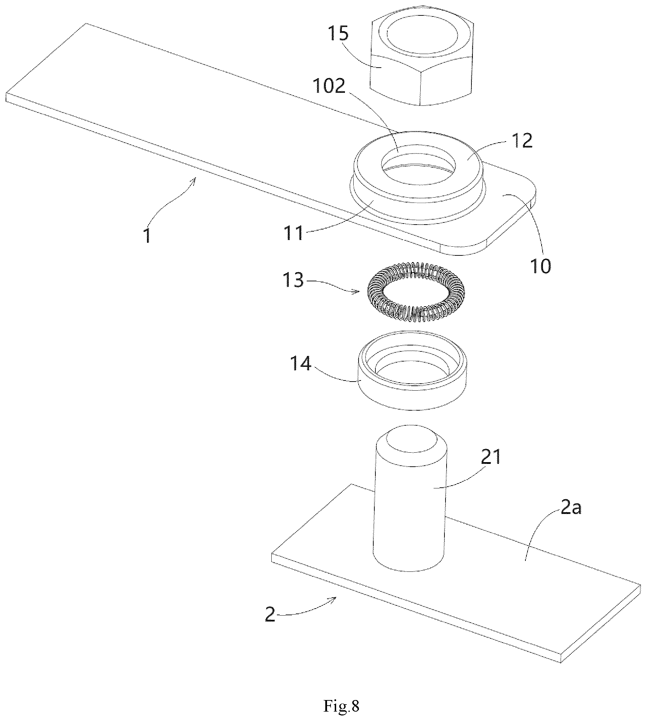

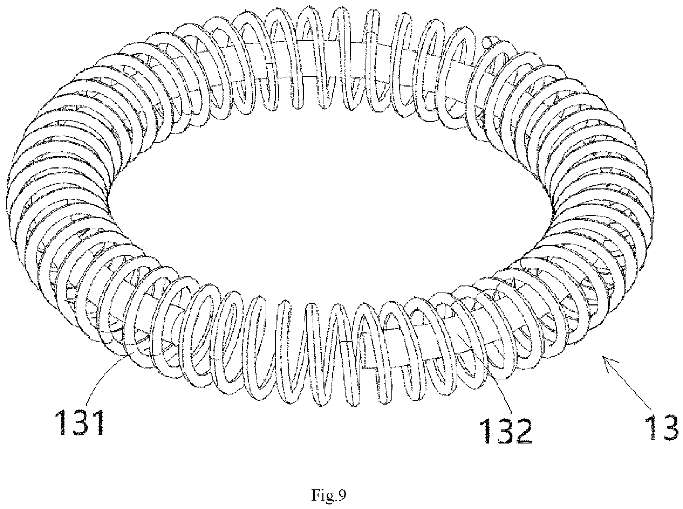

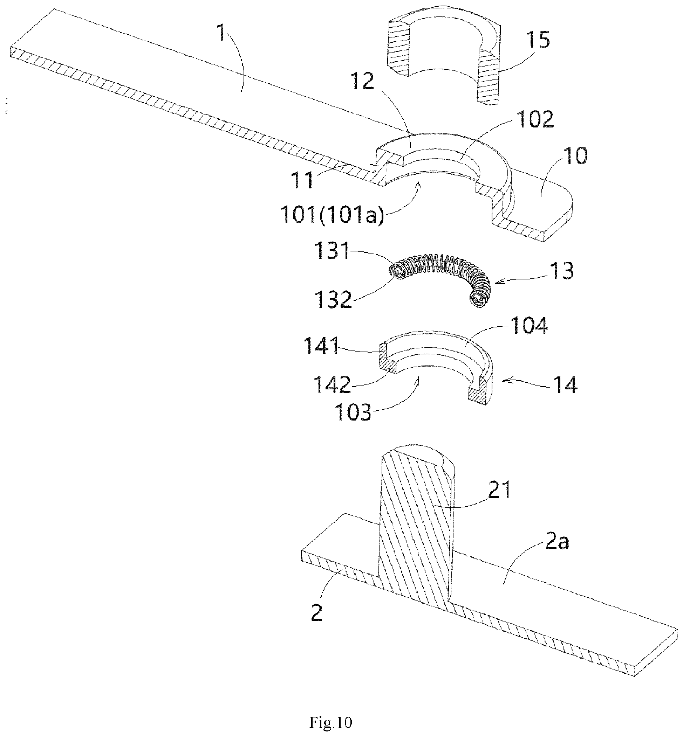

Figures 6 to 10 show a second embodiment according to the present invention. Among them, Figure 6 shows an illustrative perspective view of the electrical connection assembly according to the second embodiment of the present invention; Figure 7 shows a cross-sectional view of the electrical connection assembly shown in Figure 6; Figure 8 shows an illustrative exploded view of the electrical connection assembly according to the second embodiment of the present invention; Figure 9 shows an illustrative perspective view of the contact spring of the electrical connection assembly according to the second embodiment of the present invention; Figure 10 shows a cross-sectional view of the electrical connection assembly shown in Figure 8.

As shown in Figures 6 to 10, in an exemplary embodiment of the present invention, an electrical connection module 100 is disclosed. The electrical connection module 100 includes an electrical connection member 1 and a contact spring 13. A receiving cavity 101 is formed in the electrical connection member 1. The contact spring 13 is set in the receiving cavity 101 of the electrical connection member 1. The electrical connection member 1 has an outer peripheral wall 11 surrounding the receiving cavity 101, as well as a top wall 12 and a bottom opening 101a that are opposite to each other in the axial direction of the receiving cavity 101.

As shown in Figures 6 to 10, in the illustrated embodiment, the contact spring 13 is annular so as to be able to be fitted onto the conductive post 21 of the connected object 2 inserted from the bottom opening 14a like a ring. The contact spring 13 is adapted to undergo elastic deformation along the radial direction of the receiving cavity 101, so as to be able to make radial electrical contact with the inserted conductive post 21, enabling the electrical connection member 1 to be electrically connected to the connected object 2 via the contact spring 13.

As shown in Figures 6 to 10, in the illustrated embodiment, a top through-hole 102 is formed in the top wall 12 of the receiving cavity 101 to allow the conductive post 21 to pass through, so that the conductive post 21 inserted from the bottom opening 101a of the receiving cavity 101 can pass through the top wall 12 of the receiving cavity 101 through the top through-hole 102.

As shown in Figures 6 to 10, in the illustrated embodiment, the electrical connection module 100 further includes a limiting element 14, which is annular in shape and installed in the receiving cavity 101 for limiting the contact spring 13 in the axial direction of the receiving cavity 101 to prevent the contact spring 13 from being moved in the axial direction of the receiving cavity 101.

As shown in Figures 6 to 10, in the illustrated embodiment, the limiting element 14 has a peripheral wall portion 141, a bottom wall 142, and a top opening 104. A bottom through-hole 103 is formed in the bottom wall 142 of the limiting element 14 to allow the conductive post 21 to pass through. The bottom wall 142 of the limiting element 14 and the top wall 12 of the receiving cavity 101 are opposite in the axial direction of the receiving cavity 101 and respectively rest on the upper and lower sides of the contact spring 13, so that the contact spring 13 cannot be moved in the axial direction of the receiving cavity 101.

As shown in Figures 6 to 10, in the illustrated embodiment, the outer peripheral surface of the peripheral wall portion 141 of the limiting element 14 is in interference fit with the inner peripheral surface of the outer peripheral wall 11 of the receiving cavity 101 to fix the limiting element 14 in the receiving cavity 101.

As shown in Figures 6 to 10, in the illustrated embodiment, before the conductive post 21 is inserted into the contact spring 13, there is a predetermined gap between the contact spring 13 and the peripheral wall portion 141 of the limiting element 14 to allow the contact spring 13 to float radially in the receiving cavity 101. In this way, it can absorb errors caused by significant manufacturing, installation, or thermal expansion.

As shown in Figures 6 to 10, in the illustrated embodiment, after the conductive post 21 is inserted into the contact spring 13, the contact spring 13 is expanded by the conductive post 21 in the radial direction of the receiving cavity 101 and comes into contact with the peripheral wall portion 141 of the limiting element 14.

As shown in Figures 6 to 10, in an exemplary embodiment, before the conductive post 21 is inserted into the contact spring 13, the contact spring 13 comes into contact with the peripheral wall portion 141 of the limiting element 14.

As shown in Figures 6 to 10, in the illustrated embodiment, the top surface of the peripheral wall portion 141 of the limiting element 14 is pressed against the inner side of the top wall 12 of the receiving cavity 101, and the bottom wall 142 of the limiting element 14 is adapted to be pressed against the top surface 2a of the connected object 2, so as to be able to position the limiting element 14 in the axial direction of the receiving cavity 101.

As shown in Figures 6 to 10, in the illustrated embodiment, the electrical connection member 1 has a flat connecting portion 10, the outer peripheral wall 11 of the receiving cavity 101 protrudes from the top surface of the flat connecting portion 10. The bottom surface of the flat connection portion 10 is adapted to rest against the top surface 2a of the connected object 2, and the bottom opening 101a of the receiving cavity 101 is located on the bottom surface of the flat connection portion 10.

As shown in Figures 6 to 10, in the illustrated embodiment, the electrical connection module 100 further includes a nut 15, which is suitable for threaded connection to the conductive post 21 that passes through the top wall 12 of the receiving cavity 101, to fasten the electrical connection module 100 to the top surface 2a of the connected object 2. When the electrical connection module 100 is fastened to the top surface 2a of the connected object 2, the nut 15 is pressed against the outer side of the top wall 12 of the receiving cavity 101.

As shown in Figures 6 to 10, in the illustrated embodiment, when the electrical connection module 100 is fastened to the top surface 2a of the connected object 2, the bottom surface of the electrical connection member 1 is pressed against the top surface 2a of the connected object 2 or tilted at a predetermined angle relative to the top surface of the connected object 2.

As shown in Figures 6 to 10, in the illustrated embodiment, the contact spring 13 includes a coil spring 131 and a C-shaped elastic ring 132. The coil spring 131 is coiled into a ring shape to fit over the conductive post 21. The C-shaped elastic ring 132 is set in the coil spring 131. The coil spring 131 is used to make electrical contact with the conductive post 21, and the C-shaped elastic ring 132 is used to provide auxiliary contact force to the coil spring 131 to improve the electrical contact force between the coil spring 131 and the conductive post 21.

However, please note that the contact spring 13 of the present invention is not limited to the illustrated embodiment. For example, in another exemplary embodiment of the present invention, the contact spring 13 may include a spring plate that is wavy and coiled into a ring shape to be suitable for being placed on the conductive post 21.

As shown in Figures 6 to 10, in another exemplary embodiment of the present invention, an electrical connection assembly is disclosed. The electrical connection assembly includes an electrical connection module 100 and a connected object 2. The connected object 2 has a conductive post 21 for electrical connection. The conductive post 21 is inserted into the receiving cavity 101 of the electrical connection member 1, and the contact spring 13 is fitted onto the inserted conductive post 21 and in electrical contact with it, to electrically connect the electrical connection member 1 to the connected object 2 via the contact spring 13.

As shown in Figures 6 to 10, in the illustrated embodiment, the connected object 2 has a top surface 2a, and the conductive post 21 extends upward from the top surface 2a of the connected object 2 by a predetermined height and is threaded at the end of the conductive post 21. The conductive post 21 passes through the top through-hole 102 in the top wall 12 of the receiving cavity 101 and is threaded with the nut 15 to fasten the electrical connection module 100 to the top surface 2a of the connected object 2.

As shown in Figures 6 to 10, in the illustrated embodiment, electrical connection member 1 is a first bus bar, the connected object 2 is a second bus bar, and the first bus bar is electrically connected to the second bus bar via the contact spring 13.

As shown in Figures 6 to 10, in the illustrated embodiment, a single receiving cavity 101 is formed in the electrical connection member 1. The electrical connection module 100 is used to electrically connect with the conductive post 21 on a single connected object 2.

### Third Embodiment

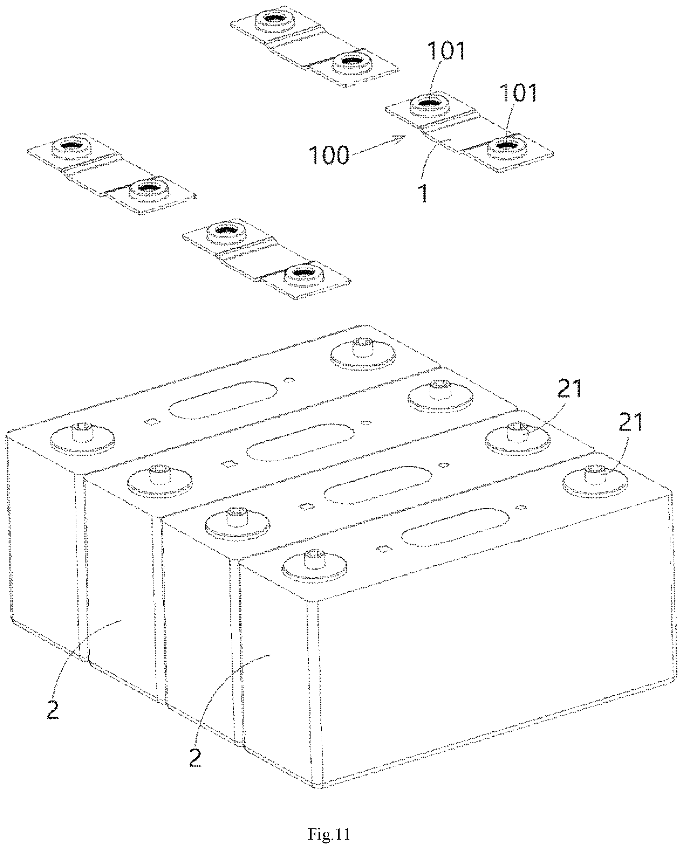

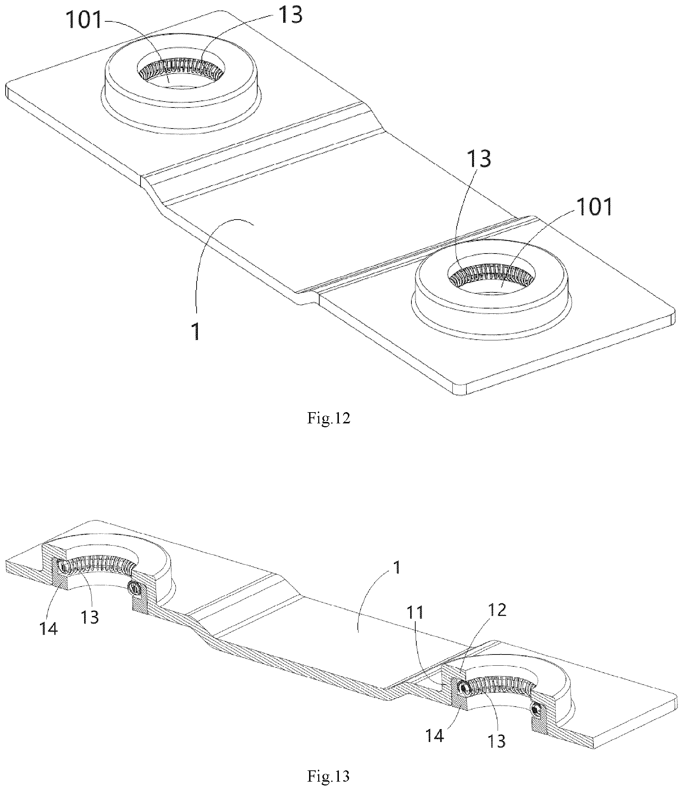

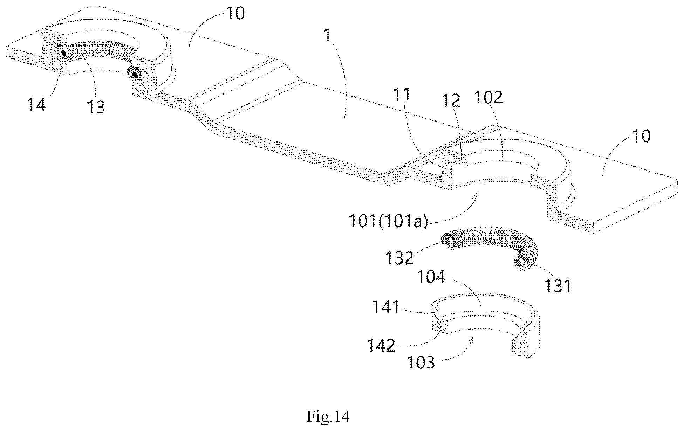

Figures 11 to 14 show a third embodiment according to the present invention. Among them, Figure 11 shows an illustrative perspective view of an electrical connection assembly according to a third embodiment of the present invention; Figure 12 shows an illustrative perspective view of an electrical connection module 100 according to a third embodiment of the present invention; Figure 13 shows a cross-sectional view of an electrical connection module 100 according to a third embodiment of the present invention; Figure 14 shows an illustrative exploded view of an electrical connection module according to a third embodiment of the present invention.

As shown in Figures 11 to 14, in an exemplary embodiment of the present invention, an electrical connection module 100 is disclosed. The electrical connection module 100 includes an electrical connection member 1 and a contact spring 13. A receiving cavity 101 is formed in the electrical connection member 1. The contact spring 13 is set in the receiving cavity 101 of the electrical connection member 1. The electrical connection member 1 has an outer peripheral wall 11 surrounding the receiving cavity 101, as well as a top wall 12 and a bottom opening 101a that are opposite to each other in the axial direction of the receiving cavity 101.

As shown in Figures 11 to 14, in the illustrated embodiment, the contact spring 13 is annular so as to be able to be fitted onto the conductive post 21 of the connected object 2 inserted from the bottom opening 14a like a ring. The contact spring 13 is adapted to undergo elastic deformation along radial direction of the receiving cavity 101, so as to be able to make radial electrical contact with the inserted conductive post 21, enabling the electrical connection member 1 to be electrically connected to the connected object 2 via the contact spring 13.

As shown in Figures 11 to 14, in the illustrated embodiment, a top through-hole 102 is formed in the top wall 12 of the receiving cavity 101 to allow the conductive post 21 to pass through, so that the conductive post 21 inserted from the bottom opening 101a of the receiving cavity 101 can pass through the top wall 12 of the receiving cavity 101 through the top through-hole 102.

As shown in Figures 11 to 14, in the illustrated embodiment, the electrical connection module 100 further includes a limiting element 14, which is annular in shape and installed in the receiving cavity 101 for limiting the contact spring 13 in the axial direction of the receiving cavity 101 to prevent the contact spring 13 from being moved in the axial direction of the receiving cavity 101.

As shown in Figures 11 to 14, in the illustrated embodiment, the limiting element 14 has a peripheral wall portion 141, a bottom wall 142, and a top opening 104. A bottom through-hole 103 is formed in the bottom wall 142 of the limiting element 14 to allow the conductive post 21 to pass through. The bottom wall 142 of the limiting element 14 and the top wall 12 of the receiving cavity 101 are opposite in the axial direction of the receiving cavity 101 and respectively rest on the upper and lower sides of the contact spring 13, so that the contact spring 13 cannot be moved in the axial direction of the receiving cavity 101.

As shown in Figures 11 to 14, in the illustrated embodiment, the outer peripheral surface of the peripheral wall portion 141 of the limiting element 14 is in interference fit with the inner peripheral surface of the outer peripheral wall 11 of the receiving cavity 101 to fix the limiting element 14 in the receiving cavity 101.

As shown in Figures 11 to 14, in the illustrated embodiment, before the conductive post 21 is inserted into the contact spring 13, there is a predetermined gap between the contact spring 13 and the peripheral wall portion 141 of the limiting element 14 to allow the contact spring 13 to float radially in the receiving cavity 101. In this way, it can absorb errors caused by significant manufacturing, installation, or thermal expansion.

As shown in Figures 11 to 14, in the illustrated embodiment, after the conductive post 21 is inserted into the contact spring 13, the contact spring 13 is expanded by the conductive post 21 in the radial direction of the receiving cavity 101 and comes into contact with the peripheral wall portion 141 of the limiting element 14.

As shown in Figures 11 to 14, in an exemplary embodiment, before the conductive post 21 is inserted into the contact spring 13, the contact spring 13 comes into contact with the peripheral wall portion 141 of the limiting element 14.

As shown in Figures 11 to 14, in the illustrated embodiment, the top surface of the peripheral wall portion 141 of the limiting element 14 is pressed against the inner side of the top wall 12 of the receiving cavity 101, and the bottom wall 142 of the limiting element 14 is adapted to be pressed against the top surface of the connected object 2, so as to be able to position the limiting element 14 in the axial direction of the receiving cavity 101.

As shown in Figures 11 to 14, in the illustrated embodiment, the electrical connection member 1 has a flat connecting portion 10, the outer peripheral wall 11 of the receiving cavity 101 protrudes from the top surface of the flat connecting portion 10. The bottom surface of the flat connection portion 10 is adapted to rest against the top surface of the connected object 2, and the bottom opening 101a of the receiving cavity 101 is located on the bottom surface of the flat connection portion 10.

As shown in Figures 11 to 14, in the illustrated embodiment, the contact spring 13 includes a coil spring 131 and a C-shaped elastic ring 132 (see Figures 4 and 9). The coil spring 131 is coiled into a ring shape to be fitted onto the conductive post 21. The C-shaped elastic ring 132 is set in the coil spring 131. The coil spring 131 is used to make electrical contact with the conductive post 21, and the C-shaped elastic ring 132 is used to provide auxiliary contact force to the coil spring 131 to improve the electrical contact force between the coil spring 131 and the conductive post 21.

However, please note that the contact spring 13 of the present invention is not limited to the illustrated embodiment. For example, in another exemplary embodiment of the present invention, the contact spring 13 may include a spring plate that is wavy and coiled into a ring shape to be suitable for being fitted onto the conductive post 21.

As shown in Figures 11 to 14, in another exemplary embodiment of the present invention, an electrical connection assembly is disclosed. The electrical connection assembly includes an electrical connection module 100 and a connected object 2. The connected object 2 has a conductive post 21 for electrical connection. The conductive post 21 is inserted into the receiving cavity 101 of the electrical connection member 1, and the contact spring 13 is fitted onto the inserted conductive post 21 and in electrical contact with it, to electrically connect the electrical connection member 1 to the connected object 2 via the contact spring 13.

As shown in Figures 11 to 14, in the illustrated embodiment, multiple receiving cavities 101 are formed in the electrical connection member 1, and the electrical connection module 100 includes multiple contact springs 13 respectively arranged in the multiple receiving cavities 101, for electrically connecting with the conductive posts 21 on the multiple connected objects 2 to electrically interconnect the conductive posts 21 on the multiple connected objects 2.

As shown in Figures 11 to 14, in the illustrated embodiment, the electrical connection module 100 further includes multiple limiting elements 14 respectively arranged in multiple receiving cavities 101, for preventing multiple contact springs 13 from being moved in the axial direction of the receiving cavity 101.

As shown in Figures 11 to 14, in the illustrated embodiment, the electrical connection member 1 is a bus bar, the connected object 2 is a rechargeable battery cell, the conductive post 21 is the electrode end of the battery cell, and the bus bar is electrically connected to the battery cell via the contact spring 13.

As shown in Figures 11 to 14, in the illustrated embodiment, receiving cavities 101 are formed at both ends of the electrical connection member 1, and the electrical connection module 100 includes two contact springs 13 respectively arranged in the receiving cavities 101 at both ends of the electrical connection member 1. The electrical connection assembly includes multiple electrical connection modules 100 and multiple battery cells. The electrode ends of adjacent battery cells are respectively inserted into the receiving cavities 101 at both ends of the electrical connection member 1, so that the electrode ends of adjacent battery cells are electrically interconnected.

However, please note that the present invention is not limited to the illustrated embodiment. For example, in another exemplary embodiment of the present invention, the electrical connection member 1 is a bus bar, the connected object 2 is a rechargeable battery cell, the conductive post 21 is the electrode end of the battery cell, and the bus bar is electrically connected to the battery cell via the contact spring 13.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. An electrical connection module, comprising:
an electrical connection member (1) formed with a receiving cavity (101); and
a contact spring (13) which is provided in the receiving cavity (101),
wherein the electrical connection member (1) has an outer peripheral wall (11) surrounding the receiving cavity (101), as well as a top wall (12) and a bottom opening (13a) opposite to the top wall (12) in an axial direction of the receiving cavity (101),
wherein the contact spring (13) is annular in shape so as to be able to be fitted like a ring onto a conductive post (21) of a connected object (2) inserted from the bottom opening (13a),
wherein the contact spring (13) is adapted to undergo elastic deformation along a radial direction of the receiving cavity (101) to make radial electrical contact with the inserted conductive post (21), so that the electrical connection member (1) is capable of being electrically connected to the connected object (2) via the contact spring (13).

2. The electrical connection module according to claim 1,
wherein a top through hole (102) is formed in the top wall (12) of the receiving cavity (101) to allow the conductive post (21) to pass through, so that the conductive post (21) inserted from the bottom opening (101a) of the receiving cavity (101) can pass through the top wall (12) of the receiving cavity (101) through the top through hole (102).

3. The electrical connection module according to claim 1, further comprising:
a limiting element (14) which is annular in shape and installed in the receiving cavity (101), is used to limit the contact spring (13) in the axial direction of the receiving cavity (101) to prevent the contact spring (13) from being moved in the axial direction of the receiving cavity (101).

4. The electrical connection module according to claim 3,
wherein the limiting element (14) has a peripheral wall portion (141), a bottom wall (142), and a top opening (104), a bottom through-hole (103) is formed in the bottom wall (142) of the limiting element (14) to allow the conductive post (21) to pass through,
wherein the bottom wall (142) of the limiting element (14) and the top wall (12) of the receiving cavity (101) are opposite in the axial direction of the receiving cavity (101) and respectively rest on the upper and lower sides of the contact spring (13), so that the contact spring (13) cannot be moved in the axial direction of the receiving cavity (101).

5. The electrical connection module according to claim 4,
wherein the outer peripheral surface of the peripheral wall portion (141) of the limiting element (14) is interference fit with the inner peripheral surface of the outer peripheral wall (11) of the receiving cavity (101) to fix the limiting element (14) in the receiving cavity (101).

6. The electrical connection module according to claim 5,
wherein before the conductive post (21) is inserted into the contact spring (13), there is a predetermined gap between the contact spring (13) and the peripheral wall portion (141) of the limiting element (14) to allow the contact spring (13) to float radially in the receiving cavity (101); whrein optionally after the conductive post (21) is inserted into the contact spring (13), the contact spring (13) is expanded by the conductive post (21) in the radial direction of the receiving cavity (101) and comes into contact with the peripheral wall portion (141) of the limiting element (14).

7. The electrical connection module according to claim 4,
wherein the top surface of the peripheral wall portion (141) of the limiting element (14) is pressed against the inner side of the top wall (12) of the receiving cavity (101), and the bottom wall (142) of the limiting element (14) is adapted to be pressed against the top surface (2a) of the connected object (2) to be able to position the limiting element (14) in the axial direction of the receiving cavity (101).

8. The electrical connection module according to claim 1,
wherein the electrical connection member (1) has a flat connection portion (10), the outer peripheral wall (11) of the receiving cavity (101) protrudes from the top surface of the flat connection portion (10);
wherein the bottom surface of the flat connection portion (10) is adapted to rest against the top surface (2a) of the connected object (2), and the bottom opening (101a) of the receiving cavity (101) is located on the bottom surface of the flat connection portion (10).

9. The electrical connection module according to claim 1, further comprising:
a nut (15) suitable for threaded connection to the conductive post (21) passing through the top wall (12) of the receiving cavity (101) to fasten the electrical connection module (100) to the top surface (2a) of the connected object (2),
wherein when the electrical connection module (100) is fastened to the top surface (2a) of the connected object (2), the nut (15) is pressed against the outer side of the top wall (12) of the receiving cavity (101).

10. The electrical connection module according to any one of claims 1-9,
wherein the contact spring (13) comprises:
a spiral spring (131) which is coiled into a ring shape to be suitable for being fitted onto the conductive post (21); and
a C-shaped elastic ring (132) which is installed in the spiral spring (131),
wherein the spiral spring (131) is used to make electrical contact with the conductive post (21), and the C-shaped elastic ring (132) is used to provide auxiliary contact force to the spiral spring (131) to improve the electrical contact force between the spiral spring (131) and the conductive post (21).

11. The electrical connection module according to any one of claims 1-9,
wherein multiple receiving cavities (101) are formed in the electrical connection member (1), and the electrical connection module (100) comprises multiple contact springs (13) respectively arranged in the multiple receiving cavities (101), for electrically connecting with conductive posts (21) on multiple connected objects (2) to electrically interconnect the conductive posts (21) on the multiple connected objects (2);
wherein the electrical connection module (100) comprises multiple limiting elements (14) respectively arranged in the multiple receiving cavities (101), for respectively preventing the multiple contact springs (13) from being moved in the axial direction of the receiving cavity (101).

12. An electrical connection assembly, comprising:
the electrical connection module (100) according to any one of claims 1-11; and
a connected object (2) which has a conductive post (21) for electrical connection,
wherein the conductive post (21) is inserted into the receiving cavity (101) of the electrical connection member (1), and the contact spring (13) is fitted onto the inserted conductive post (21) and in electrical contact with the conductive post (21) to electrically connect the electrical connection member (1) to the connected object (2) via the contact spring (13).

13. The electrical connection assembly according to claim 12,
wherein the connected object (2) has a top surface (2a), and the conductive post (21) extends upward from the top surface (2a) of the connected object (2) by a predetermined height and has a thread formed on the end of the conductive post (21);
wherein the conductive post (21) passes through the top through-hole (102) in the top wall (12) of the receiving cavity (101) and is threaded with a nut (15) to fasten the electrical connection module (100) to the top surface (2a) of the connected object (2).

14. The electrical connection assembly according to claim 12,
wherein the electrical connection member (1) is a first bus bar, the connected object (2) is a second bus bar, and the first bus bar is electrically connected to the second bus bar via the contact spring (13); or
wherein the electrical connection member (1) is a bus bar, and the connected object (2) is an electrical device, the bus bar is electrically connected to the electrical device via the contact spring (13).

15. The electrical connection assembly according to claim 12,
wherein the electrical connection member (1) is a bus bar, the connected object (2) is a rechargeable battery cell, the conductive post (21) is an electrode end of the battery cell, and the bus bar is electrically connected to the battery cell via the contact spring (13); wherein optionally the two ends of the electrical connection member (1) are respectively formed with the receiving cavities (101), and the electrical connection module (100) comprises two contact springs (13) respectively arranged in the receiving cavities (101) at both ends of the electrical connection member (1);
wherein the electrical connection assembly comprises multiple electrical connection modules (100) and multiple battery cells, the electrode ends of adjacent battery cells are respectively inserted into the receiving cavities (101) at both ends of the electrical connection member (1), so that the electrode ends of adj acent battery cells are electrically interconnected.
